# EUROPÄISCHE PATENTSCHRIFT

(11) **EP 2 832 491 B1**
(45) Veröffentlichungstag und Bekanntmachung des Hinweises auf die Patenterteilung: **17.05.2017**
(21) Anmeldenummer: 14002628.7
(22) Anmeldetag: 29.07.2014
(51) Int. Cl.: B23Q 1/52, B23Q 1/66

(54) **Werkstückhaltevorrichtung für eine Werkzeugmaschine**
Workpiece holding device for a machine tool
Dispositif de support de pièce pour machine-outil

(30) Priorität: 29.07.2013 DE 102013012631
(43) Veröffentlichungstag der Anmeldung: 04.02.2015
(73) Patentinhaber: Alfing Kessler Sondermaschinen GmbH, 73433 Aalen (DE)
(72) Erfinder: Kopetschek, Roland, 72275 Alpirsbach (DE); Faaß, Norbert, 73433 Aalen (DE)
(74) Vertreter: Patentanwälte Bregenzer und Reule Partnerschaftsgesellschaft mbB

(56) Entgegenhaltungen:
- EP-A1- 0 691 178
- EP-A1- 0 744 244
- EP-A1- 1 524 067
- EP-A2- 0 650 800
- CN-Y- 201 208 695
- DE-A1- 10 160 743
- GB-A- 1 334 256
- JP-A- S53 122 987
- US-A1- 2012 011 964

## Beschreibung

Die Erfindung betrifft eine Werkstückhaltevorrichtung für eine Werkzeugmaschine gemäß dem Oberbegriff des Anspruchs 1.

Eine derartige Werkstückhaltevorrichtung ist beispielsweise in EP 0744 244 A1 oder EP 0 691 178 A1 erläutert.

Es ist bekannt, einen Werkstückhalter mit mehreren Werkstückhaltebereichen vorzusehen, wobei der Werkstückhalter in der Art eines Balkens ausgestaltet ist und um eine Schwenkachse schwenkt. In Abhängigkeit von der Schwenkstellung stehen die Werkstücke dann zur Bearbeitung mit dem Bearbeitungswerkzeug bereit. Ein solcher Werkstückhalter kann jedoch nicht beliebig zur Beladung oder Entladung mit Werkstücken genutzt werden. Es ist immer eine vorbestimmte Drehstellung oder Schwenkstellung nötig, damit jeweils ein Satz von Werkstücken bearbeitet werden kann, während ein anderer Satz von Werkstücken zum Beladen oder Entladen bereitsteht. Im Sinne einer schnellen Werkstückbearbeitung ist dies nicht.

Weiterhin ist es bekannt, bei Werkzeugmaschinen die Werkstücke anhand beispielsweise eines sogenannten Doppelwendespanners bereitzustellen, so dass sie durch eines oder mehrere Bearbeitungswerkzeuge, zum Beispiel Bohrer, Fräser oder dergleichen, bearbeitet werden können. Die Werkstückhalter dieses Doppelwendespanners sind an einem Gestell mit zwei Armen schwenkbar gelagert, wobei die beiden Arme um eine zentrale Schwenkachse schwenken. Die Werkstückhalter können an den Armen in der Art von Planeten relativ zu der zentralen Schwenkachse schwenken. Der sogenannte Doppelwendespanner arbeitet zwar schneller als der obige relativ einfach aufgebaute Werkstückhalter, ist jedoch kompliziert und benötigt viel Platz.

Es ist daher die Aufgabe der Erfindung, eine für eine effiziente Werkstückbearbeitung geeignete Werkstückhaltevorrichtung bereitzustellen.

Zur Lösung der Aufgabe ist eine Werkstückhaltevorrichtung gemäß der technischen Lehre des Anspruchs 1 vorgesehen.

Zur Lösung der Aufgabe kann auch eine erfindungsgemäße Werkstückhaltevorrichtung einen Bestandteil einer Werkzeugmaschine bilden. Ferner umfasst die Erfindung eine Werkzeugmaschine, die mit einer erfindungsgemäßen Werkstückhaltevorrichtung ausgestattet ist.

Es ist ein Grundgedanke der vorliegenden Erfindung, dass die Werkstückhaltevorrichtung klein und kompakt baut, da nämlich die mindestens zwei Werkstückhalter um dieselbe Schwenkachse koaxial schwenkbar gelagert sind. Ein Winkelabstand zwischen den Werkstückhaltern ist jedoch nicht fest, sondern kann verändert werden. So ist es möglich, den einen Werkstückhalter beispielsweise zur Werkstück-Bearbeitung in dem Arbeitsbereich zu lassen, während der oder die anderen Werkstückhalter sich zum Beladen oder Entladen im Werkstückwechselbereich befinden. Es ist auch möglich, dass zwei oder mehr Werkstückhalter im Arbeitsbereich sind, während einer oder mehrere Werkstückhalter eine Position zwischen dem Arbeitsbereich und dem Werkstückwechselbereich einnehmen. Die erfindungsgemäße Werkstückhaltevorrichtung ist also äußerst schnell und effizient, da eine einfache Positionierung der jeweiligen Werkstückhalter um die Schwenkachse in den gewünschten Werkstückwechselbereich oder Arbeitsbereich oder in eine Zwischenposition dazwischen möglich ist.

Der erste Werkstückhalter und der mindestens eine zweite Werkstückhalter - es können auch weitere Werkstückhalter vorgesehen sein - sind an zueinander beabstandeten Lageraufnahmen gelagert und erstrecken sich zweckmäßigerweise zwischen den Lageraufnahmen. Die Lageraufnahmen sind beispielsweise an Lagerelementen, insbesondere Lagerböcken, vorgesehen.

Es können beispielsweise der erste Werkstückhalter und der mindestens eine zweite Werkstückhalter in der Art von Balken oder balkenartigen Trägern ausgestaltet sein. Die Balken oder balkenartigen Träger erstrecken sich zwischen den Lageraufnahmen.

Es ist vorgesehen, dass der erste Werkstückhaltebereich des ersten Werkstückhalters und der mindestens eine zweite Werkstückhaltebereich des mindestens einen zweiten Werkstückhalters vollständig oder zumindest über einen Teilabschnitt der Schwenkachse dieselbe Längsposition bezüglich der Schwenkachse haben.

Eine Längserstreckung oder Längslänge des jeweiligen Werkstückhaltebereichs des ersten und des mindestens einen Werkstückhaltebereichs in Bezug auf die Schwenkachse ist vorzugsweise gleich.

Die jeweiligen Werkstückhaltebereiche der Werkstückhalter und der Arbeitsbereich, in welchen die Werkstückhaltebereiche hinein geschwenkt werden können, haben bezüglich der Schwenkachse vorzugsweise dieselbe Längsposition. Sie liegen also bezüglich der Schwenkachse sozusagen auf derselben Längsposition oder Höhe. An dieser Stelle sei aber bemerkt, dass es durchaus möglich ist, dass beispielsweise ein Werkstückhaltebereich einen axialen Versatz bezüglich des anderen Werkstückhaltebereichs aufweist, wobei bei dieser Konstellation eine Überlappung zweckmäßig ist, d.h. dass sich Teilbereiche der Werkstückhaltebereiche in Bezug auf die Schwenkachse axial sozusagen überlappen.

Es ist möglich, dass der erste Werkstückhalter an einer ersten Lageraufnahme eines ersten Lagerelements und der zweite Werkstückhalter an einer zweiten Lageraufnahme eines zweiten Lagerelements gelagert sind, wobei die Lagerelemente beispielsweise Lagerböcke umfassen. Die Lagerelemente können z.B. an einem Schlitten oder Maschinenbett angeordnet sein. Ein derartiges Lagerelement kann aber auch an einem jeweiligen Werkstückhalter vorgesehen sein, so dass sozusagen der eine Werkstückhalter den anderen Werkstückhalter um die Schwenkachse schwenkbar oder drehbar gelagert ist.

Die Lagerelemente oder Lagerböcke sind beispielsweise ortsfest an einem Maschinenbett der Werkzeugmaschine angeordnet. Es ist aber auch möglich, dass die Lagerelemente oder Lagerböcke beispielsweise an einem Schlitten oder einer sonstigen beweglichen Einrichtung der Werkzeugmaschine angeordnet sind. Mithin kann also die erfindungsgemäße Werkstückhaltevorrichtung einen Träger, beispielsweise einen Schlitten, zur linear beweglichen und/oder drehbaren Lagerung der mindestens zwei Werkstückhalter umfassen oder an einem Träger oder Schlitten angeordnet sein.

Es ist möglich, dass der erste und der zweite Werkstückhalter unabhängig voneinander an voneinander separaten Lagerelementen gelagert sind.

Zweckmäßigerweise ist vorgesehen, dass der erste Werkstückhalter und der mindestens eine zweite Werkstückhalter zwischen ihren Längsenden durch mindestens ein Lager, sozusagen ein Zwischen-Lager, abgestützt sind. Das mindestens eine Zwischen-Lager kann beispielsweise ein Lagerelement umfassen, das bezüglich eines Maschinenbetts oder eines Schlittens der Werkzeugmaschine ortsfest ist. Der Vorteil des mindestens einen zwischen den Längsenden angeordneten Zwischen-Lagers ist, dass beispielsweise einer Durchbiegung eines jeweiligen Werkstückhalters entgegengewirkt wird.

Es ist vorteilhaft, wenn der erste Werkstückhalter und der mindestens eine zweite Werkstückhalter zwischen ihren Längsendbereichen aneinander oder an einem Träger, z.B. einem Maschinenbett oder einem Schlitten, gelagert sind.

Ein in der Zeichnung dargestelltes Ausführungsbeispiel der Erfindung sieht beispielsweise vor, dass die Werkstückhalter, beispielsweise zwei Werkstückhalter oder weitere Werkstückhalter, an mindestens drei Stellen schwenkbar gelagert sind, nämlich an ihren Längsendbereichen sowie in einem Zwischenbereich zwischen den Längsenden. Gerade dort ist es vorteilhaft, wenn die Werkstückhalter sozusagen aneinander schwenkbar gelagert sind, so dass sie sich wechselseitig stützen. Aber auch an Längsendbereichen ist es zweckmäßig, wenn der eine Werkstückhalter den anderen Werkstückhalter drehbar lagert. Dazu sind beispielsweise die nachfolgend noch erläuterten Hohlwellen-Konstruktionen vorteilhaft.

Es ist vorteilhaft, wenn die beiden Werkstückhalter oder weitere Werkstückhalter aneinander schwenkbar gelagert sind, so dass sie sich in einem Bereich zwischen den Lagerelementen, beispielsweise den Lagerböcken, gegenseitig abstützen. Eine bevorzugte Ausführungsform sieht vor, dass sich die mindestens zwei Werkstückhalter zwischen ihren Längsendbereichen (bezogen auf die Schwenkachse) wechselseitig lagern. So steht beispielsweise vom einen Werkstückhalter ein Lagerachselement vor, das in eine zwischen den jeweiligen Längsenden vorgesehene Lageraufnahme des mindestens einen zweiten Werkstückhalters eingreift. Wenn sich die beiden oder weiteren Werkstückhalter wechselseitig zwischen den Längsenden lagern, stabilisieren sie sich gegenseitig. Einer eventuellen Durchbiegung, die bei der Werkstückbearbeitung von Werkstücken am einen Werkstückhalter auftreten kann, wirkt der mindestens eine andere Werkstückhalter sozusagen im Sinne einer Abstützung entgegen.

Es können mehrere derartige Zwischen-Lager vorgesehen sein, d.h. dass die Werkstückhalter sogar in der Art eines Klavierbandes aneinander gelagert sein können.

Eine vorteilhafte Ausführungsform der Erfindung sieht vor, dass der erste Werkstückhalter und der mindestens eine zweite Werkstückhalter sich wechselseitig bezüglich der Schwenkachse drehbar lagern. Eine einfache Ausführungsform kann vorsehen, dass der erste Werkstückhalter zwar den mindestens einen zweiten Werkstückhalter drehbar lagert, jedoch nicht umgekehrt der zweite Werkstückhalter den ersten Werkstückhalter drehbar lagert, sondern dass in diesem Fall der erste Werkstückhalter anderweitig drehbar gelagert ist, zum Beispiel an einem an einem Maschinenbett oder Schlitten angeordneten Lagerelement oder Lagerbock oder dergleichen.

Die ersten und zweiten Werkstückhalter haben zweckmäßigerweise jeweils Lagerachselemente, die koaxial in einer der Lager-aufnahmen oder in beiden Lageraufnahmen angeordnet sind. Mithin ist es vorteilhaft, wenn mindestens ein Werkstückhalter, vorzugsweise zwei oder alle Werkstückhalter, an ihren jeweiligen Längsenden in einer Lageraufnahme angeordnet sind. Die koaxiale Anordnung von Lagerachselementen in einer gemeinsamen Lageraufnahme ist dabei ein großer Vorteil.

Es ist möglich, einen jeweiligen Werkstückhalter nur an einer Stelle anzutreiben und/oder zu fixieren, z.B. zu klemmen (sozusagen abzuklemmen), beispielsweise im Bereich einer Lageraufnahme, in die sein jeweiliges Lagerachselement eingreift. Vorteilhaft ist jedoch, wenn ein Werkstückhalter an beiden Längsendbereichen angetrieben und/oder fixierbar ist, beispielsweise klemmbar ist. Beispielsweise ist an jeder Lageraufnahme ein Schwenkantrieb zum Antreiben von Lagerachselementen eines jeweiligen Werkstückhalters vorgesehen, so dass der Werkstückhalter an seinen beiden zueinander beabstandeten Lagerbereichen oder Längsenden angetrieben ist. Dies wirkt einer Verspannung oder Torsion des Werkstückhalters entgegen oder vermeidet diese.

Es ist möglich, dass ein jeweiliger Schwenkantrieb zum Antreiben eines Werkstückhalters beispielsweise ein Getriebe umfasst.

Bevorzugt ist es, wenn mindestens ein Werkstückhalter einen Direktantrieb zum Schwenken zwischen dem Arbeitsbereich und dem Werkstückwechselbereich aufweist.

Mindestens ein Lagerachselement ist vorzugsweise als ein Wellenstück ausgestaltet.

Eine vorteilhafte Ausführungsform sieht vor, dass mindestens ein Lagerachselement des einen Werkstückhalters oder eines Werkstückhalters einen Hohlwellenabschnitt aufweist, in welchem ein Lagerachselement oder das Lagerachselement des anderen Werkstückhalters koaxial aufgenommen ist. Mithin lagert also das eine Lagerachselement des einen Werkstückhalters das Lagerachselement des anderen Werkstückhalters. In dem Hohlwellenabschnitt ist beispielsweise das als Wellenstück ausgestaltete Lagerachselement des anderen Werkstückhalters aufgenommen. Hierbei ist es möglich, dass das Wellenstück mit einer Gleitlagerung in dem Hohlwellenabschnitt aufgenommen ist. Selbstverständlich können auch Wälzlager, beispielsweise Kugellager oder Rollenlager, vorgesehen sein.

Eine bevorzugte Ausführungsform sieht dabei vor, dass am einen Längsende, das heißt in der einen Lageraufnahme, der Hohlwellenabschnitt des ersten Werkstückhalters das Lagerachselement des mindestens einen zweiten Werkstückhalters gelagert ist, während am gegenüberliegenden Längsende, das heißt der anderen, zum Beispiel zweiten Lageraufnahme, der Hohlwellenabschnitt des mindestens einen zweiten Werkstückhalters das Lagerachselement des ersten Werkstückhalters gelagert ist.

Eine derartige Ausgestaltung ist beispielsweise dann ohne weiteres realisierbar, wenn, wie in einer bevorzugten Ausführungsform der Erfindung vorgesehen, die Werkstückhalter gleichartig ausgestaltet sind. Besonders bevorzugt ist eine punktsymmetrische Anordnung und/oder Ausgestaltung der Werkstückhalter, so dass beispielsweise die obige Anordnung mit wechselseitig das Lagerachselement des anderen Werkstückhalters lagernden Hohlwellenabschnitten leicht realisierbar ist.

Eine andere Ausführungsform, die selbstverständlich auch mit der oben erläuterten Hohlwellen-Ausführungsform kombinierbar ist, sieht vor, dass das Lagerachselement des einen Werkstückhalters vor das Lagerachselement des anderen Werkstückhalters bezüglich der Schwenkachse vorsteht, wobei beide Lagerachselemente in derselben Lageraufnahme gelagert sind. Auf diese Weise sind zum Beispiel beide Lagerachselemente unmittelbar an derselben Lageraufnahme gelagert. In diesem Zusammenhang ist es besonders einfach, dass jeweils ein Schwenkantrieb mit dem jeweiligen Lagerachselement antriebsgekoppelt ist und somit das Lagerachselement unmittelbar antreiben kann.

Beispielsweise sind die Lagerachselemente stufig ausgestaltet, d.h. dass beispielsweise das vom Werkstückhaltebereich des Werkstückhalters weiter entfernte Lagerachselement einen größeren Außenumfang aufweist als das bezüglich der Schwenkachse näher beim Werkstückhaltebereich oder einem der Werkstückhaltebereiche angeordnete Lagerachselement.

Ferner ist eine Fixiereinrichtung vorteilhaft, die einen jeweiligen Werkstückhalter bezüglich der Schwenkachse drehfest fixiert. Die Fixiereinrichtung ist zweckmäßigerweise auch zu einer Längsfixierung bezüglich der Schwenkachse geeignet, d.h. dass ein jeweiliger Werkstückhalter nicht mehr entlang der Schwenkachse verschieblich ist.

Die Fixiereinrichtung umfasst beispielsweise eine Klemmeinrichtung und/oder eine formschlüssig halteende Fixiereinrichtung, zum Beispiel mit einem oder mehreren Riegelelementen, Verzahnungen oder dergleichen.

Die Fixiereinrichtung kann zu einer Fixierungen bezüglich einer Maschinenbasis, beispielsweise des vorgenannten Maschinenbetts, oder eines bezüglich des Maschinenbett beweglichen Trägers, insbesondere eines Schlittens, vorgesehen sein.

Es ist aber auch vorteilhaft, wenn die Fixiereinrichtung den einen Werkstückhalter bezüglich des anderen Werkstückhalters in Bezug auf die Schwenkachse fixiert, insbesondere drehfest festlegt. Somit kann also beispielsweise eine Drehmitnahmekupplung erreicht werden, d.h. dass ein angetriebener Werkstückhalter den mit ihm verbundenen oder an ihm fixierten anderen Werkstückhalter sozusagen mitnimmt.

Die Fixiereinrichtung umfasst beispielsweise als Fixiermittel eine Dehnhülse und/oder eine Spannhülse und/oder einen Riegel und/oder eine Zahnung, Zahnräder oder dergleichen andere fixierende Komponenten.

Die Fixiermittel sind zweckmäßigerweise an einem jeweiligen Lager angeordnet. Die Fixiermittel können auch direkt auf einen Läufer, insbesondere einen Außenläufer, eines Schwenkantriebs, mit dem ein jeweiliger Werkstückhalter schwenk-angetrieben wird, wirken.

Die Fixiereinrichtung wirkt zweckmäßigerweise im Bereich eines jeweiligen Drehlagers auf den jeweiligen Werkstückhalter ein. So ist es beispielsweise möglich, dass ein Lagerachselement oder eine Hohlwelle eines Werkstückhalters an einem Lagerelement an einem Längsende des Werkstückhalters durch die Fixiereinrichtung verriegelt, verklemmt oder in sonstiger Weise fixiert wird. Es ist auch möglich, dass die Fixiereinrichtung zwischen Lagerkomponenten wirksam ist, mit denen die Werkstückhalter aneinander gelagert sind, beispielsweise im Sinne einer Hohlwellen-Lagerung oder dergleichen.

Diese Fixierung kann am Längsendbereich erfolgen, das heißt beispielsweise nahe bei dem vorgenannten Lagerbock oder Lagerelement. Es ist aber auch möglich, dass die Fixierung bei dem vorgenannten mindestens einen Zwischen-Lager vorgesehen ist, d.h. dass im Bereich des Zwischen-Lagers Lagerkomponenten der beiden Werkstückhalter (oder der weiteren Werkstückhalter) relativ zueinander drehfest festgelegt werden.

Zwischen den Lagerachselementen zweier Werkstückhalter, beispielsweise des ersten Werkstückhalters und des mindestens einen zweiten Werkstückhalters, ist vorzugsweise eine Fixiereinrichtung zum drehfesten Fixieren der beiden Lagerachselemente aneinander vorgesehen. Das Lagerachselement des einen Werkstückhalters ist somit drehfest mit dem Lagerachselement des anderen Werkstückhalters verbindbar.

Die Fixiereinrichtung umfasst beispielsweise einen Elektromotor. Es ist aber auch möglich, dass pneumatische und/oder hydraulische Spannelemente oder Fixierelemente vorgesehen sind. Mithin kann die Fixiereinrichtung auch einen pneumatischen und/oder hydraulischen Antrieb aufweisen.

Die Fixiereinrichtung umfasst zweckmäßigerweise eine Spanneinrichtung zum Verspannen des einen Lagerachselements mit dem anderen Lagerachselement. Unter einer Verspannung wird beispielsweise auch eine Verklemmung verstanden. Selbstverständlich ist es auch möglich, dass die Fixiereinrichtung eine formschlüssige Fixierung ermöglich, beispielsweise indem ein Riegelelement, eine Formschlusskontur oder dergleichen, in Eingriff mit den beiden aneinander zu fixierenden Lagerachselementen gebracht wird.

Die Fixiereinrichtung umfasst beispielsweise eine Dehnhülse oder eine Spannhülse oder beides, die in einem Hohlwellenabschnitt eines Lagerachselement des einen Werkstückhalters angeordnet ist. Ein Lagerachselement des anderen Werkstückhalters ist in der Dehnhülse oder Spannhülse drehbar angeordnet, beispielsweise gleitbeweglich, so dass das innere Lagerachselement bei einer Betätigung der Dehnhülse oder Spannhülse in eine Fixierstellung drehfest in dem Hohlwellenabschnitt des anderen Lagerachselement aufgenommen ist.

Wie gesagt, kann die Dehnhülse oder Spannhülse ein Gleitlager für das in ihr aufgenommene Lagerachselement umfassen.

Es ist auch möglich, dass die Fixiereinrichtung einen Schwenkantrieb, insbesondere einen Torqueantrieb, umfasst, der in einem Hohlwellenabschnitt eines Lagerachselements des einen Werkstückhalters angeordnet ist und zum Dreh-Antreiben des Lagerachselements des anderen Werkstückhalters dieses Lagerachselement aufnimmt und in einer Haltestellung die beiden Lagerachselemente drehfest relativ zueinander hält. Der Schwenkantrieb ist beispielsweise ein Direktantrieb, also ein Antrieb ohne Getriebe. Ein Antrieb mit Getriebe ist aber auch möglich.

In mindestens einer Drehstellung des einen Werkstückhalters relativ zum anderen Werkstückhalter, beispielsweise zwischen dem ersten und dem mindestens einen zweiten Werkstückhalter, ist ein Winkelabstand zwischen den jeweiligen Werkstückhaltern vorhanden. Der Winkelabstand ist zweckmäßigerweise veränderbar, d.h. dass beispielsweise der erste Werkstückhalter in dem Arbeitsbereich positioniert bleibt, während der mindestens eine zweite Werkstückhalter relativ dazu verschwenkt wird, sich beispielsweise in den Werkstückwechselbereich hinein bewegt oder aus diesem heraus wird.

Es ist auch möglich, dass einer der Werkstückhalter oder jeder Werkstückhalter segmentiert ist, das heißt dass er in Bezug auf die Längserstreckungsrichtung der Schwenkachse ein erstes und mindestens ein zweites Werkstückhaltersegment aufweist. Die beiden Werkstückhaltersegmente sind relativ zueinander verschwenkbar.

An einem jeweiligen Werkstückhaltebereich, auch an den Werkstückhaltersegmenten, können beispielsweise Halteaufnahmen, Spannelemente oder dergleichen zum Halten oder Spannen mindestens eines Werkstücks vorgesehen sein.

In einer bevorzugten Anwendung handelt es sich bei der Werkzeugmaschine um eine Mehrspindel-Werkzeugmaschine, d.h. dass zweckmäßigerweise an einem jeweiligen Werkstückhaltebereich Halterungen und/oder Spanneinrichtungen und dergleichen für mindestens zwei Werkstücke vorgesehen sind, vorzugsweise drei oder vier Werkstücke.

Ein jeweiliger Werkstückhaltebereich kann beispielsweise eine ebene Planfläche umfassen. Es ist aber auch möglich, dass ein Werkstückhaltebereich eine gebogene oder gekrümmte Haltefläche aufweist. Es ist möglich, dass über einen jeweiligen Krümmungsradius hinweg mehrere Werkstück-Halterungen und somit auch Werkstücke nebeneinander, d.h. in Umfangsrichtung zueinander beabstandet, angeordnet sind.

Ferner kann an mindestens einem Werkstückhaltebereich auch eine integrierte Werkstückaufnahme, insbesondere mit einer Vertiefung, vorgesehen sein. Es ist beispielsweise möglich, dass an mindestens einem Werkstückhaltebereich eine Werkstückaufnahme vorgesehen ist, die das jeweilige Werkstück ganz oder zumindest bereichsweise formschlüssig aufnimmt und/oder an mindestens einer Seite abstürzt.

Ferner ist es möglich, dass mindestens ein bezüglich des Werkstückhaltebereichs ortsfestes oder bewegliches Spannelement, zum Beispiel ein Spannbacken, oder eine Anordnung mehrerer Spannelemente einen integralen Bestandteil eines jeweiligen Werkstückhaltebereichs bildet.

Eine bevorzugte Ausführungsform, die auch in Kombination mit den oben genannten Geometrien realisierbar ist, sieht vor, dass mindestens einer der Werkstückhaltebereiche zueinander winkelige Halteflächen zum Halten von jeweils mindestens einem Werkstück aufweist. An den jeweiligen Halteflächen können Werkstücke zur Bearbeitung durch das mindestens eine Bearbeitungswerkzeug bereitstehen. So ist es beispielsweise möglich, dass die Halteflächen in einem Winkel von beispielsweise 80-120° zueinander winkelig sind. Es ist auch möglich, dass an beispielsweise zwei der Halteflächen jeweils ein Werkstück gehalten wird, wobei beide Werkstücke gleichzeitig durch voneinander separate Bearbeitungswerkzeuge bearbeitet werden, d.h. dass beispielsweise ein Werkstück gebohrt wird, während an dem anderen Werkstück eine Fräsarbeit durchgeführt wird oder ebenfalls auch eine Bohrung eingebracht wird.

Zweckmäßigerweise ist vorgesehen, dass die Werkstückhalter gleichartig ausgestaltet sind und zueinander punktsymmetrisch angeordnet sind.

Nachfolgend werden Ausführungsbeispiele der Erfindung anhand der Zeichnung erläutert. Es zeigen:
- Figur 1: eine schematische Seitenansicht einer Werkzeugmaschine mit einer erfindungsgemäßen Werkstückhaltevorrichtung, die in
- Figur 2: frontal von oben gezeigt ist,
- Figur 3: eine perspektivische Schrägansicht eine Variante der Werkstückhaltevorrichtung gemäß der vorstehenden Figuren, bei der zusätzlich noch ein Zwischen-Lager vorgesehen ist, und
- Figur 4: eine Explosionsdarstellung der Werkstückhaltevorrichtung gemäß Figur 3.

Eine schematisch dargestellte Werkzeugmaschine 10 umfasst beispielhaft eine oder mehrere Spindeln 11, 11a, 11b, an denen ein Bearbeitungswerkzeug 12, 12a, 12b, zum Beispiel ein Fräskopf, ein Bohrer oder dergleichen, lösbar oder auswechselbar anordenbar ist. Mit dem Bearbeitungswerkzeug 12 können Werkstücke 90 einer ersten Werkstückanordnung 91 und einer zweiten Werkstückanordnung 92, zum Beispiel Motorblöcke, Pleuel oder dergleichen andere Werkstücke, insbesondere aus Metall, einer Werkstückanordnung bearbeitet werden.

Das Bearbeitungswerkzeug 12, 12a, 12b und die Spindeln 11, 11a, 11b befinden sich in einem Arbeitsraum A, wo die Werkstückbearbeitung stattfindet.

Es können selbstverständlich auch Werkstückanordnungen 91 und/oder 92 mit mehreren, gleichzeitig zu bearbeitenden Werkstücken vorgesehen sein. Dazu sind dann zweckmäßigerweise an einem jeweiligen Werkstückhalter mehrere, insbesondere in einer Reihenrichtung nebeneinander und/oder übereinander angeordnete, Werkstück-Halterungen vorgesehen.

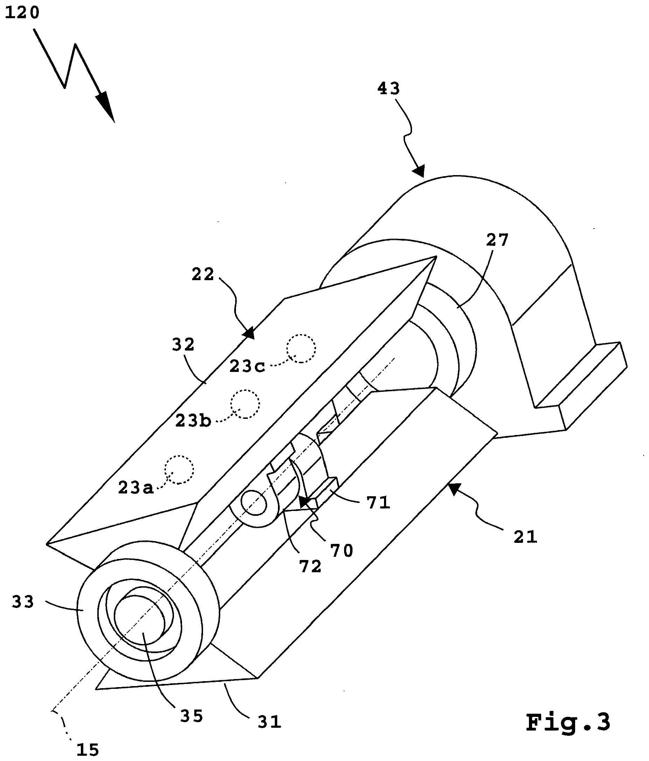

Beispielsweise ist in Figur 3 angedeutet, dass in einer Reihenrichtung nebeneinander mehrere Werkstück-Halterungen 23a, 23b, 23c an dem Werkstückhalter 21 angeordnet sind, was selbstverständlich auch beim Werkstückhalter 22 ohne weiteres möglich wäre. Die Werkstück-Halterungen 23 umfassen beispielsweise Aufnahmefutter, Klemmbacken, Steckaufnahmen oder dergleichen andere, dem Fachmann bekannte Werkstück-Halterungen. Selbstverständlich sind auch Halterungen für so genannte Werkstück-Paletten ohne weiteres möglich. An dieser Stelle sei aber bemerkt, dass es durchaus möglich ist, dass am einen Werkstückhalter 21 mehrere Werkstück-Halterungen angeordnet sind, beispielsweise zwei oder weitere, während am anderen Werkstückhalter 22 eine andere Anzahl von Werkstücken-Halterungen vorgesehen ist, beispielsweise nur eine einzige oder mindestens eine mehr oder weniger als beim Werkstückhalter 21.

Gleichfalls ist es möglich, dass mehrere, insbesondere in einer Reihenrichtung nebeneinander und/oder übereinander angeordnete, Spindeln 11, 11a, 11b in der Art der Spindel 11 vorhanden sind, so dass beispielsweise mehrere Pleuel oder dergleichen andere Werkstücke gleichzeitig bearbeitet werden können, insbesondere spanabhebend bearbeitet werden können. Die Werkzeugmaschine 10 kann also Einspindel- oder eine Mehrspindel-Werkzeugmaschine sein.

Die Werkstückanordnungen 91, 92 sind an einem ersten Werkstückhalter 21 und einem zweiten Werkstückhalter 22 einer Werkstückhaltevorrichtung 20 gehalten. An ersten und zweiten Werkstückhaltebereichen 31, 32 der Werkstückhalter 21, 22 sind beispielsweise Klemmhalterungen, Spannbacken oder dergleichen andere Werkstück-Halterungen 23 für die Werkstücke 90, 92 vorgesehen. Je nach Bedarf können unterschiedliche Haltewerkzeuge oder Spannwerkzeuge vorgesehen sein.

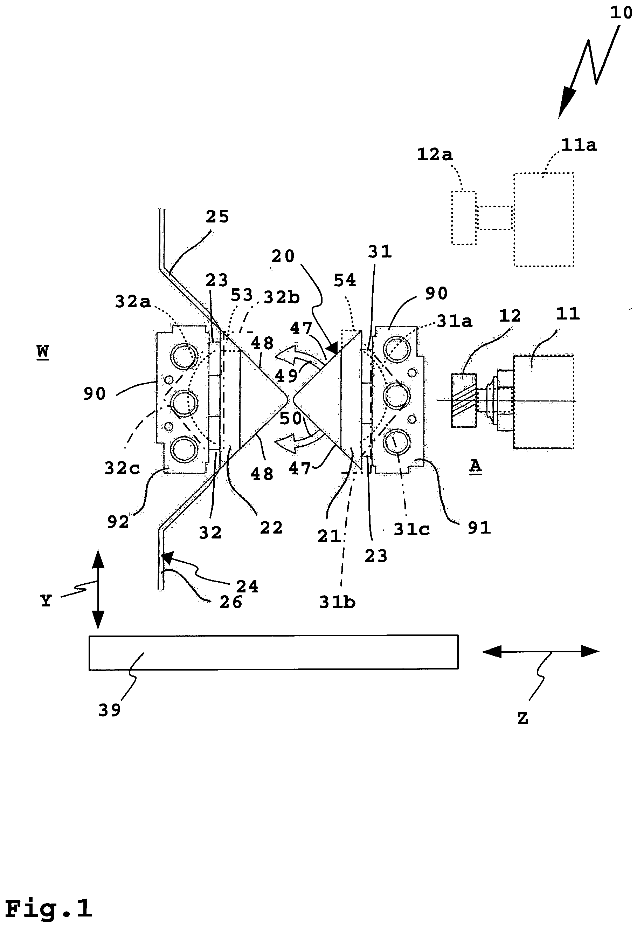

Der Werkstückhalter 21 ist in Figur 1 in den Arbeitsbereich A hinein bewegt, während sich der andere Werkstückhalter 22 außerhalb des Arbeitsbereichs A, nämlich in einem Werkstückwechselbereich W, befindet.

Im Werkstückwechselbereich W kann das dort aktuell befindliche Werkstück 90 gegen ein anderes, noch unbearbeitetes Werkstück ausgetauscht werden. Eine Beeinträchtigung durch beispielsweise Kühlmittel, umher schleudernde Späne oder dergleichen, ist im Werkstückwechselbereich W nicht zu befürchten. Beispielsweise ist der Werkstückwechselbereich W durch eine Schottwand 24 vom Arbeitsbereich A getrennt. Die Schottwand 24 hat beispielsweise ein erstes Schott 25 und ein zweites Schott 26, beispielsweise verschiebbaren Wände oder dergleichen, die bei einer Stellbewegung der Werkstückhaltevorrichtung 20 in eine Offenstellung bringbar sind, so dass ein Bewegungsraum für die Werkstückhaltevorrichtung 20 vorhanden ist. Die Werkstückhaltevorrichtung 20 kann dann wie nachfolgend erläutert bewegt werden.

Die Werkstückhalter 21, 22 können nämlich koaxial um eine gemeinsame Schwenkachse 15 schwenken und sind zudem relativ zueinander ebenfalls um die Schwenkachse 15 schwenkbar. Das ermöglicht eine Vielzahl von Bewegungsfreiheitgraden bei der Werkstückbearbeitung und beim Werkstückwechsel. Dennoch ist die Werkstückhaltevorrichtung 20 äußerst kompakt, was nachfolgend noch deutlich wird.

Die beiden Werkstückhalter 21, 22 sind koaxial um die Schwenkachse 15 schwenkbar an Lageraufnahmen 41, 42 gelagert, die an Lagerelementen 43, 44 einer Lageranordnung 40 vorgesehen sind.

Die Lageranordnung 40 ist beispielsweise an einem Maschinenbett ortsfest oder einem Schlitten 39 beispielsweise in Z-Richtung und/oder y-Richtung relativ zur Spindel 11 verfahrbar.

Die Lagerelemente 43, 44 sind beispielsweise als Lagerböcke oder dergleichen ausgestaltet. In der Lageraufnahme 41 ist beispielsweise ein Lagerachselement 27 des Werkstückhalters 21 drehbar gelagert. Das Lagerachselement 27 umfasst beispielsweise einen Hohlwellenabschnitt 28. Im Hohlwellenabschnitt 28 ist ein Lagerachselement 29 des anderen Werkstückhalters 22 koaxial aufgenommen und drehbar gelagert. Das äußere Lagerachselement 27 lagert also das innere Lagerachselement 29.

Auf der anderen Seite, beim Lagerelement 44, ist die Situation genau umgekehrt, das heißt dass in der Lageraufnahme 42 ein Lagerachselement 33 des Werkstückhalters 22 drehbar aufgenommen ist, welcher auch als ein Hohlwellenabschnitt 34 ausgestaltet ist. Im Hohlwellenabschnitt 34 ist koaxial ein Lagerachselement 35 des ersten Werkstückhalters 21 drehbar gelagert.

Die Lagerachselemente 27, 33 stehen beispielsweise von Trägern 57, 58 der Werkstückhalter 21, 22 ab.

Die Lagerachselemente 27, 29 und 33, 35 können bei einem alternativen Ausführungsbeispiel direkt aneinander gelagert sein. Das ist jedoch vorliegend nicht realisiert:

Zwischen den Lagerachselementen 27, 29 und 33, 35 ist vorteilhaft jeweils eine Lagerhülse oder Dehnhülse 36 vorgesehen. Die Dehnhülse 36 ist also jeweils im Innenraum des Hohlwellenabschnitts 28, 34 angeordnet. Wenn die Dehnhülsen 36 entspannt sind, also nicht gedehnt sind, können die im Innern der Dehnhülsen 36 angeordneten Lagerachselemente 29, 35, die z.B. Wellenstücke bilden oder aufweisen, frei drehen. Wenn jedoch die Dehnhülsen 36 gespannt sind, beispielsweise durch eine Hydraulik-Flüssigkeit, wirken sie als eine Fixiereinrichtung 30 dergestalt, dass die Lagerachselemente 27, 29 und 33, 35 relativ zueinander drehfest sind.

Diese Drehfestigkeit oder Fixierung ist beispielsweise bei der Werkstückbearbeitung durch das Bearbeitungswerkzeug 12 zweckmäßig.

Anstelle der Dehnhülsen 36 oder zusätzlich zu diesen sind aber auch Formschlusselemente 55, zum Beispiel Riegel, möglich, um die Werkstückhalter 21, 22 relativ zueinander drehfest festzulegen. Die Formschlusselemente 55 können beispielsweise elektromotorisch, pneumatisch, magnetisch oder dergleichen betätigt werden, wofür entsprechende Antriebe (nicht dargestellt) vorgesehen sind.

Die Fixiereinrichtung 30 ermöglicht es aber auch, dass mit einem einzigen, auf das jeweils äußere Lagerachselement 27, 33 wirkenden Schwenkantrieb 37, 38 die Werkstückhaltevorrichtung 20 als Ganzes gedreht werden kann, d.h. dass ohne eine unerwünschte Verspannung oder Torsion die beiden Schwenkantriebe 37, 38 beide Werkstückhalter 21, 22 an ihren jeweiligen Längsendbereichen antreiben können, um die Werkstückhalter 21, 22 gleichzeitig aus dem Arbeitsbereich A in den Werkstückwechselbereich W bzw. umgekehrt zu verstellen.

Es versteht sich, dass einer der Schwenkantriebe 37 oder 38 ausreichen würde.

Zwischen den Lagerachselementen 27 und 35 des Werkstückhalters 21 erstreckt sich ein balkenartiger Tragabschnitt 45 des ersten Werkstückhalters 21. Am Tragabschnitt 45 ist der Werkstückhaltebereich 31 vorgesehen.

Zwischen den Lagerachselementen 29 und 33 des zweiten Werkstückhalters 22 ist ein balkenartiger Tragabschnitt 46 vorgesehen. Die Tragabschnitte 45, 46 haben vorliegend als ebene Flächen ausgestaltete Werkstückhaltebereiche 31, 32. Selbstverständlich ist es möglich, an den Werkstückhaltern 21, 22 beispielsweise gebogene oder gekrümmte Werkstückhaltebereiche 31a, 32a oder sich auch über einen Winkel erstreckende Werkstückhaltebereiche 31b, 32b vorzusehen, d.h. Werkstückhaltebereiche, die zueinander winkelige Oberflächen zum Halten von Werkstücken 90 aufweisen.

Ein Werkstückhaltebereich 31c, 32c, der sozusagen dachkantartig bezüglich der Schwenkachse 15 ist, stellt eine relativ große Oberfläche zum Halten und Spannen von Werkstücken 90 bereit.

An den Werkstückhaltebereiche 31a, 32a, 31b, 32b, 31c, 32c sind zum Beispiel Spanneinrichtungen oder Halterungen 23 angeordnet (nicht dargestellt).

Die den Werkstückhaltebereichen 31, 32 abgewandten Rückseiten 47, 48 der Tragabschnitte 45, 46 sind beispielsweise als Winkelsegmente ausgestaltet, so dass es möglich ist, die beiden Werkstückhalter 21, 22 entsprechend Pfeilen 49, 50 relativ zueinander zu verstellen (Figur 1).

Es ist aber auch denkbar, dass beispielsweise an der Rückseite 48 des einen Tragabschnitts 46 eine Aussparung 53 vorgesehen ist, in die ein Vorsprung 54 an der Rückseite 47 des anderen Tragabschnitts 45 eintauchen kann, um eine relative Drehbeweglichkeit der beiden Tragabschnitte 45, 46 zu ermöglichen.

Der im Arbeitsbereich A befindliche Werkstückhalter 21 kann also beispielsweise relativ zum Bearbeitungswerkzeug 12 positioniert werden, was die Werkstückbearbeitung erleichtert, während der andere Werkstückhalter 22 an Ort und Stelle verbleibt, um die Werkstücke 90 zu wechseln.

Es ist natürlich auch möglich, dass beide Werkstückhalter 21, 22 gleichzeitig betätigt werden, wofür beispielsweise die Schwenkantriebe 37, 38 oder ein Schwenkantrieb 51, 52 vorgesehen sein kann, der direkt auf die Lagerachselemente 29, 35 wirken kann. Anhand der Schwenkantriebe 37, 38, 51, 52 ist es möglich, beide Werkstückhalter 21, 22 relativ zueinander und völlig unabhängig voneinander zu bewegen. Selbstverständlich sind die Dehnhülsen 36 dann nicht unbedingt nötig, können aber dennoch zweckmäßigerweise vorgesehen sein.

Die Lagerachselemente 29, 35 stehen in Richtung der Schwenkachse 15 vor die Lagerachselemente 27 33 vor, so dass dort die Schwenkantriebe 51, 52 direkt antreiben können. Wenn dies nicht notwendig ist, können die Lagerachselemente 29, 35 auch bezüglich der Schwenkachse 15 mit den Lagerachselementen 27, 33 bündig abschließen oder sogar etwas zurückversetzt sein, d.h. dass sie nicht vor die Lagerelemente 43, 44 vorstehen.

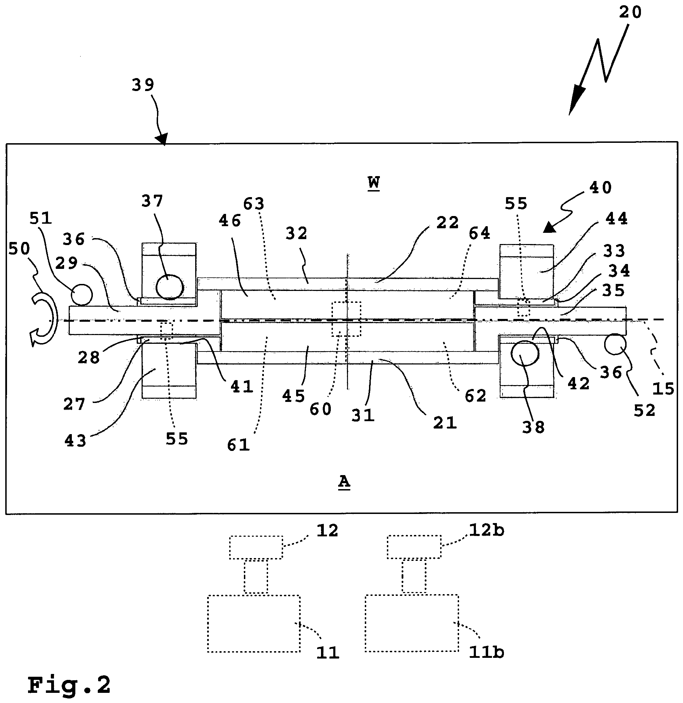

Eine weitere Variante ist in Figur 2 schematisch angedeutet, bei der der Werkstückhalter 21 beispielsweise ein erstes Werkstückhaltersegment 61 und ein zweites Werkstückhaltersegment 62 aufweist, während der andere Werkstückhalter 22 ein erstes Werkstückhaltersegment 63 und ein zweites Werkstückhaltersegment 64 aufweist.

Die Werkstückhaltersegmente 61-64 erstrecken sich beispielsweise jeweils etwa bis zur Längsmitte der Tragabschnitte 45, 46. Beispielsweise sind die Tragabschnitte 45, 46 in der Mitte aufgeteilt. Eine andere Aufteilung ist möglich.

Zweckmäßigerweise sind die Werkstückhaltersegmente 61-64 mittels einer Lageranordnung 60 koaxial zur Schwenkachse 15 relativ zueinander drehbar.

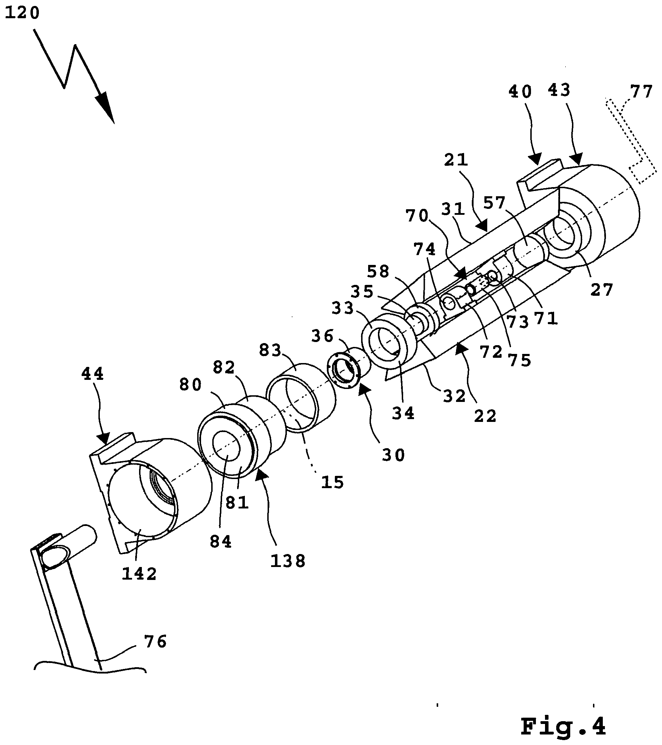

Bei dem in den Figuren 3 und 4 dargestellten modifizierten Ausführungsbeispiel der Werkstückhaltevorrichtung 20, einer Werkstückhaltevorrichtung 120, sind gleiche oder gleichartige Komponenten mit denselben Bezugsziffern versehen, wie beim Ausführungsbeispiel gemäß Figuren 1 und 2.

Zwischen beispielsweise an einem Schlitten oder einem Maschinenbett angeordneten Lagerelementen 43, 44 erstrecken sich Werkstückhalter 21, 22, die jedoch nicht nur an ihren Längsendbereichen bezüglich der Schwenkachse 15 gelagert sind, nämlich an den Lagerelementen 43, 44, sondern auch an mindestens einer Stelle zwischen den Längsenden, vorzugsweise etwa längsmittig, anhand mindestens eines Zwischen-Lagers 70.

Das Zwischen-Lager 70 umfasst einen Lagerträger 71, der am Werkstückhalter 21 angeordnet ist, sowie einen Lagerträger 72, der am anderen Werkstückhalter 22 vorgesehen ist. Vom Lagerträger 71 steht ein Lagerachselement 73 ab, das in einer Lageraufnahme 74 des Lagerträgers 72 drehbar aufgenommen ist, allerdings nicht direkt daran gelagert ist, sondern indirekt.

Zwischen dem Lagerachselement 73 und der Lageraufnahme 74 ist nämlich eine ein Fixiermittel darstellende Hülse 75 vorgesehen, die in eine Fixierstellung bringbar ist, in welcher sie das Lagerachselement 73 in der Lageraufnahme 74 verklemmt, also bezüglich einer Drehung um die Schwenkachse 15 fixiert. Die Hülse 75 ist also eine klingelte, beispielsweise über eine Energiezuführungseinrichtung 76 mit einem Fluid, beispielsweise Druckluft, Hydraulikflüssigkeit oder dergleichen versorgbar ist, um sie aus einer Lösestellung, in welcher das Lagerachselement 73 in der Lageraufnahme 74 drehen kann, beispielsweise indem die Dehn- oder Spann-Hülse 75 ein Gleitlagerelement darstellt, in die vorgenannte Fixierstellung zu bringen. Die Energiezuführungseinrichtung 76 ist beispielsweise durch sich entlang der Schwenkachse 15 erstreckende Durchtrittsöffnungen, beispielsweise eine sich durch einen Schwenkantrieb 138 hindurch erstreckende Durchtrittsöffnung 84, der Werkstückhaltevorrichtung 120 bis zu dem Zwischen-Lager 70 geführt. An der entgegengesetzten Seite, am anderen Längsende, kann selbstverständlich auch eine Energiezuführungseinrichtung 77, beispielsweise eine so genannte Energiekette, vorgesehen sein.

Das Antriebskonzept und Fixierkonzept der Werkstückhaltevorrichtung 120 wird nachfolgend in Bezug auf das Lagerelement 44 näher erläutert, wobei zweckmäßigerweise am Lagerelement 43 dieselbe Konstellation gegeben ist, d.h. ein ähnlicher Schwenkantrieb sowie ähnliche Fixiermittel oder auch ein gleichartiger Schwenkantrieb und gleiche Fixiermittel.

Das sozusagen am Längsende des Werkstückhalters 22 im Bereich des Lagerelements 44 angeordnete Lagerachselement 33 nimmt beispielsweise die Dehnhülse 36 auf, in welche das Lagerachselement 35 am Träger 58 des anderen Werkstückhalters 21 eingreift. Die Dehnhülse 36 ist beispielsweise durch eine Fluidbeaufschlagung in eine Fixierstellung bringbar, in welcher sie die Lagerachselemente 35, 33 bezüglich der Schwenkachse 15 drehfest miteinander verbindet oder fixiert.

Dies kann beispielsweise zu eine Drehmitnahme genutzt werden, so dass der an sich den Werkstückhalter 22 antreibende Schwenkantrieb 138 nicht nur den Werkstückhalter 2 20 antreibt, sondern über die Drehmitnahme auch den anderen Werkstückhalter 21. Bevorzugt ist jedoch die Fixierung dann gegeben, wenn an den Werkstückhaltern 21, 22 angeordnete Werkstücke 90 (nicht dargestellt) bearbeitet werden.

Ein Stator 80 des Schwenkantriebs 138 ist beispielsweise in einer Motoraufnahme 142 des Lagerelements 44 aufgenommen. Im Innern des Stators 80 ist ein Läufer 81 angeordnet, dessen vorderer Abtriebsabschnitt 82 drehfest mit dem Lagerachselement 33 verbunden ist.

Der Läufer 81 könnte selbstverständlich auch anhand einer anderen Lagerung bezüglich des Stators 80 drehbar gelagert seien, beispielsweise einer Lagereinrichtung, die am Lagerelement 44 vorgesehen ist.

Der Abtriebsabschnitt 82 greift in eine Hülse 83 ein, die beispielsweise außenseitig drehfest mit dem Lagerelement 44 verbunden sein kann oder aber auch eine Lagerhülse darstellen kann, die im Lagerelement 44, beispielsweise der Motorhalterung oder Motoraufnahme 142, drehbar aufgenommen ist.

Die Hülse 83 bildet ein weiteres Fixiermittel der Fixiereinrichtung 30. Die Hülse 83 kann beispielsweise mit Fluid beaufschlagt werden, so dass jedenfalls ihr Innenumfang den Abtriebsabschnitt 82 drehfest hält. Weiterhin ist es denkbar, dass die Hülse 83 bei Beaufschlagung mittels beispielsweise Hydraulikfluid oder Luft sich sozusagen dient, so dass sie den Abtriebsabschnitt 82 sozusagen mit dem Innenumfang der Motoraufnahme 142, die diesem Fall auch einen Lageraufnahme 42 sein kann, drehfest bezüglich der Schwenkachse 15 fixiert.

Die Hülse 83, aber auch die Dehnhülse 36 sowie die Hülse 75 gebildeten Kraftschlusselemente oder Fixiermittel.

Bevorzugt ist es also, wenn ein jeweiliger Werkstückhalter einer erfindungsgemäßen Werkstückhaltevorrichtung durch ein von außen wirkendes Kraftschlusselement, insbesondere eine Hülse, einen Riegel oder dergleichen, drehfest bezüglich einer maschinenseitigen Lagerung, beispielsweise bezüglich eines Maschinenbetts oder eines Schlittens, festlegbar ist. Weiterhin sind Kraftschlusselemente zwischen den Lagerelementen von Werkstückhaltern vorteilhaft, wobei die Lagerelemente der Werkstückhalter die Werkstückhalter schwenkbar bezüglich der Schwenkachse aneinander lagern.

## Patentansprüche

1. Werkstückhaltevorrichtung für eine Werkzeugmaschine (10) zum Halten von Werkstücken (90) für eine maschinelle Bearbeitung mit mindestens einem Bearbeitungswerkzeug (12), wobei die Werkstückhaltevorrichtung (20) einen ersten und mindestens einen zweiten Werkstückhaltebereich (31, 32) zum Halten einer ersten und einer zweiten jeweils mindestens ein Werkstück (90) enthaltenden Werkstückanordnung aufweist, wobei die Werkstückhaltebereiche (31, 32) um eine Schwenkachse (15) in einen Arbeitsbereich (A) des mindestens einen Bearbeitungswerkzeugs (12) zur Werkstück-Bearbeitung und in einen Werkstückwechselbereich (W) zum Wechseln von an dem jeweiligen Werkstückhaltebereich (31, 32) angeordneten Werkstücken (90) schwenkbar sind, wobei die Werkstückhaltevorrichtung einen ersten Werkstückhalter (21), an dem der erste Werkstückhaltebereich (31) vorgesehen ist, und mindestens einen zweiten Werkstückhalter (22), an dem der mindestens eine zweite Werkstückhaltebereich (32) vorgesehen ist, aufweist, und wobei der erste und der zweite Werkstückhalter (21, 22) koaxial und um die Schwenkachse (15) relativ zueinander schwenkbar gelagert sind, **dadurch gekennzeichnet, dass** der erste Werkstückhaltebereich (31) des ersten Werkstückhalters (21) und der mindestens eine zweite Werkstückhaltebereich (32) des mindestens einen zweiten Werkstückhalters (22) vollständig oder zumindest über einen Teilabschnitt der Schwenkachse (15) dieselbe Längsposition bezüglich der Schwenkachse (15) haben, wobei der erste Werkstückhalter (21) und der mindestens eine zweite Werkstückhalter (22) an zueinander beabstandeten Lageraufnahmen (41, 42) gelagert sind und sich zwischen oder neben den Lageraufnahmen (41, 42) erstrecken.

2. Werkstückhaltevorrichtung nach Anspruch 1, **dadurch gekennzeichnet, dass**, wobei vorteilhaft vorgesehen ist, dass der erste Werkstückhalter (21) an einem ersten Lagerelement (43) mit einer ersten Lageraufnahme (41) und der mindestens eine zweite Werkstückhalter (22) an einem zweiten Lagerelement (44) mit einer zweiten Lageraufnahme (42) gelagert ist, wobei die beiden ersten und zweiten Lageraufnahmen (41, 42) bezüglich der Schwenkachse (15) einen Längsabstand zueinander aufweisen.

3. Werkstückhaltevorrichtung nach einem der vorhergehenden Ansprüche, **dadurch gekennzeichnet, dass** ein Lagerachselement des einen Werkstückhalters (21) vor ein Lagerachselement des anderen Werkstückhalters (22) bezüglich der Schwenkachse (15) in eine beide Lagerachselemente lagernde Lageraufnahme (41, 42) hinein vorsteht, so dass jedes der Lagerachselemente unmittelbar an der Lageraufnahme (41, 42) gelagert ist.

4. Werkstückhaltevorrichtung nach einem der vorhergehenden Ansprüche, **dadurch gekennzeichnet, dass** der erste Werkstückhalter (21) den mindestens einen zweiten Werkstückhalter (22) und/oder der mindestens eine zweite Werkstückhalter (22) den ersten Werkstückhalter (21) lagert oder dass der erste Werkstückhalter (21) und der mindestens eine zweite Werkstückhalter (22) aneinander gelagert sind.

5. Werkstückhaltevorrichtung nach Anspruch 4, **dadurch gekennzeichnet, dass** ein Lagerachselement (27) des ersten Werkstückhalters (21) und/oder ein Lagerachselement (33) des mindestens einen zweiten Werkstückhalters (22) koaxial in einer Lageraufnahme (41, 42) des jeweils anderen Werkstückhalters (21, 22) gelagert sind und/oder dass mindestens ein Lagerachselement (27, 33) des einen Werkstückhalters (21, 22) einen Hohlwellenabschnitt (28, 34) aufweist, in welchem das Lagerachselement (29, 35) des anderen Werkstückhalters (21, 22) koaxial aufgenommen ist.

6. Werkstückhaltevorrichtung nach einem der vorhergehenden Ansprüche, **dadurch gekennzeichnet, dass** mindestens zwei der Werkstückhalter (21, 22) jeweils durch einen separaten Schwenkantrieb (37, 38) voneinander unabhängig angetrieben sind und/oder dass zwischen mindestens zwei der Werkstückhalter (21, 22) eine Drehmitnahmekupplung vorgesehen ist, so dass ein Schwenkantrieb (37) des einen Werkstückhalters (21) bei geschlossener Drehmitnahmekupplung den anderen Werkstückhalter (22) mitnimmt.

7. Werkstückhaltevorrichtung nach Anspruch 6, **dadurch gekennzeichnet, dass** an mindestens zwei Lageraufnahmen (41, 42), vorteilhaft an jeder Lageraufnahme (41, 42), ein Schwenkantrieb (37, 38, 51, 52) zum Antreiben von Lagerachselementen eines jeweiligen Werkstückhalters (21, 22) vorgesehen ist, so dass der Werkstückhalter (21, 22) zumindest an einem oder an mehreren seiner zueinander beabstandeten Lagerbereichen antreibbar ist.

8. Werkstückhaltevorrichtung nach einem der vorhergehenden Ansprüche, **dadurch gekennzeichnet, dass** mindestens einem Werkstückhalter (21, 22) ein Direktantrieb zum Schwenken zwischen dem Arbeitsbereich (A) und dem Werkstückwechselbereich (W) zugeordnet ist.

9. Werkstückhaltevorrichtung nach einem der vorhergehenden Ansprüche, **dadurch gekennzeichnet, dass** sie eine Fixiereinrichtung (30) zum drehfesten Fixieren mindestens eines der Werkstückhalter (21, 22) bezüglich einer Maschinenbasis, insbesondere eines Schlittens und/oder zum drehfesten Fixieren des einen Werkstückhalters (21) bezüglich des anderen Werkstückhalters (22) insbesondere der Lagerachselemente, aufweist.

10. Werkstückhaltevorrichtung nach Anspruch 9, **dadurch gekennzeichnet, dass** die Fixiereinrichtung (30) Fixiermittel zwischen mindestens zwei Werkstückhaltern (21, 22), insbesondere zwischen den Lagerachselementen (27, 29, 33, 35) zweier Werkstückhalter (21, 22) und/oder Fixiermittel zwischen einem Werkstückhalter (21, 22) und einem den Werkstückhalter um die Schwenkachse (15) lagernden Träger aufweist, wobei die Fixiereinrichtung (30) zweckmäßigerweise eine Spanneinrichtung zum Verspannen des einen Lagerachselements mit dem anderen Lagerachselement und/oder eine Verriegelungseinrichtung zum Verriegeln der beiden Lagerachselemente aneinander umfasst.

11. Werkstückhaltevorrichtung nach Anspruch 9 oder 10, **dadurch gekennzeichnet, dass** die Fixiereinrichtung (30) eine Dehnhülse (36) oder Spannhülse umfasst, die in einem Lagerinnenraum, insbesondere in einem Hohlwellenabschnitt (28, 34), eines Lagerachselements des einen Werkstückhalters (21, 22) oder eines die Werkstückhaltevorrichtung tragenden Trägers angeordnet ist, und dass ein Lagerachselement des anderen Werkstückhalters (21, 22) in der Dehnhülse (36) oder Spannhülse angeordnet ist, so dass das innere Lagerachselement bei einer Betätigung der Dehnhülse (36) oder Spannhülse in eine Fixierstellung drehfest in dem Lagerinnenraum, insbesondere dem Hohlwellenabschnitt (28, 34), aufgenommen ist.

12. Werkstückhaltevorrichtung nach einem der Ansprüche 9 bis 11, **dadurch gekennzeichnet, dass** die Fixiereinrichtung (30) einen Schwenkantrieb (37, 38, 51, 52), insbesondere einen Torqueantrieb, umfasst, der in einem Hohlwellenabschnitt (28, 34) eines Lagerachselements des einen Werkstückhalters (21) angeordnet ist und zum Dreh-Antreiben des Lagerachselements des anderen Werkstückhalters (22) dieses Lagerachselement aufnimmt und in einer Haltestellung die beiden Lagerachselemente drehfest relativ zueinander hält.

13. Werkstückhaltevorrichtung nach einem der vorhergehenden Ansprüche, **dadurch gekennzeichnet, dass** mindestens einer der Werkstückhalter (21) ein erstes Werkstückhaltersegment (61-64) und mindestens ein zweites Werkstückhaltersegment (61-64) aufweist, wobei die Werkstückhaltersegmente (61-64) relativ zu der Schwenkachse (15) zueinander schwenkbar sind, wobei die Werkstückhaltersegmente (61-64) vorteilhaft anhand einer Lageranordnung (60) aneinander schwenkbar gelagert sind.

14. Werkstückhaltevorrichtung nach einem der vorhergehenden Ansprüche, **dadurch gekennzeichnet, dass** mindestens einer der Werkstückhaltebereiche (31b, 32b; 31c, 32c) zueinander winkelige Halteflächen zum Halten von jeweils mindestens einem Werkstück (90) aufweist, so dass an den jeweiligen Halteflächen Werkstücke (90) zur Bearbeitung durch das mindestens eine Bearbeitungswerkzeug (12) bereitstehen.

15. Werkzeugmaschine (10) mit einer Werkstückhaltevorrichtung (20) nach einem der vorhergehenden Ansprüche.

## Claims

1. Workholding device for a machine tool (10) for holding workpieces (90) for machining with at least one machining tool (12), wherein the workholding device (20) comprises a first and at least one second workholding region (31, 32) for holding a first and a second workpiece assembly, each containing at least one workpiece (90), wherein the workholding regions (31, 32) can be pivoted about a pivot axis (15) into a working region (A) of the at least one machining tool (12) for machining and into a workpiece loading and unloading region (W) for loading and unloading workpieces (90) located in the respective workholding region (31, 32), wherein the workholding device comprises a first workholder (21), on which the first workholding region (31) is provided, and at least one second workholder (22), on which the at least one second workholding region (32) is provided, and wherein the first and the second workholders (21, 22) are mounted coaxially and pivotably relative to one another about the pivot axis (15), **characterised in that** the first workholding region (31) of the first workholder (21) and the at least one second workholding region (32) of the at least one second workholder (22) have the same longitudinal position relative to the pivot axis (15) either as a whole or at least along a subsection of the pivot axis (15), wherein the first workholder (21) and the at least one second workholder (22) are mounted on mutually spaced bearing receptacles (41, 42) and extend between or adjacent to the bearing receptacles (41, 42).

2. Workholding device according to claim 1, **characterised in that** the first workholder (21) is advantageously mounted on a first bearing element (43) with a first bearing receptacle (41) and the at least one second workholder (22) is mounted on a second bearing element (44) with a second bearing receptacle (42), the two first and second bearing receptacles (41, 42) having a longitudinal distance from one another relative to the pivot axis (15).

3. Workholding device according to any of the preceding claims, **characterised in that** a bearing axis element of the one workholder (21) projects in front of a bearing axis element of the other workholder (22) relative to the pivot axis (15) into a bearing receptacle (41, 42) supporting both bearing axis elements, so that each of the bearing axis elements is immediately supported on the bearing receptacle (41, 42).

4. Workholding device according to any of the preceding claims, **characterised in that** the first workholder (21) supports the at least one second workholder (22) and/or the at least one second workholder (22) supports the first workholder (21), and/or **in that** the first workholder (21) and the at least one second workholder (22) are supported on one another.

5. Workholding device according to claim 4, **characterised in that** a bearing axis element (27) of the first workholder (21) and/or a bearing axis element (33) of the at least one second workholder (22) is/are coaxially arranged in a bearing receptacle (41, 42) of the respective other workholder (21, 22), and/or **in that** at least one bearing axis element (27, 33) of the one workholder (21, 22) has a hollow shaft section (28, 34), in which the bearing axis element (29, 35) of the other workholder (21, 22) is coaxially accommodated.

6. Workholding device according to any of the preceding claims, **characterised in that** at least two of the workholders (21, 22) are independently driven by separate semirotary actuators (37, 38), and/or **in that** a rotary drive clutch is provided between at least two of the workholders (21, 22), so that a semirotary actuator (37) of the one workholder (21) drives the other workholder (22) when the rotary drive clutch is closed.

7. Workholding device according to claim 6, **characterised in that** a semirotary actuator (37, 38, 51, 52) for driving bearing axis elements of a respective workholder (21, 22) is provided on at least two bearing receptacles (41, 42), advantageously on each bearing receptacle (41, 42), so that the workholder (21, 22) can be driven in at least one bearing region or in several of its mutually spaced bearing regions.

8. Workholding device according to any of the preceding claims, **characterised in that** a direct drive for pivoting between the working region (A) and the loading and unloading region (W) is assigned to at least one workholder (21, 22).

9. Workholding device according to any of the preceding claims, **characterised in that** it comprises a locating device (30) for the non-rotatable location of at least one of the workholders (21, 22) relative to a machine base, in particular a slide, and/or for the non-rotatable location of the one workholder (21) relative to the other workholder (22), in particular of the bearing axis elements.

10. Workholding device according to claim 9, **characterised in that** the locating device (30) comprises locating means between at least two workholders (21, 22), in particular between the bearing axis elements (27, 29, 33, 35) of two workholders (21, 22), and/or locating means between a workholder (21, 22) and a support supporting the workholder about the pivot axis (15), the locating device (30) expediently comprising a clamping device for clamping the one bearing axis element to the other bearing axis element and/or a locking device for locking the two bearing axis elements to one another.

11. Workholding device according to claim 9 or 10, **characterised in that** the locating device (30) comprises an expansion sleeve (36) or clamping sleeve located in a bearing interior, in particular in a hollow shaft section (28, 34) of a bearing axis element of the one workholder (21, 22) or a support supporting the work holding device, and **in that** a bearing axis element of the other workholder (21, 22) is located in the expansion sleeve (36) or clamping sleeve, so that the inner bearing axis element is, when the expansion sleeve (36) or clamping sleeve is operated, held non-rotatably in a locating position in the bearing interior, in particular in the hollow shaft section (28,34).

12. Workholding device according to any of claims 9 to 11, **characterised in that** the locating device (30) comprises a semirotary actuator (37, 38, 51, 52), in particular a torque drive, which is located in a hollow shaft section (28, 34) of a bearing axis element of the one workholder (21) and accommodates this bearing axis element for the rotary drive of the bearing axis element of the other workholder (22) and in a holding position holds the two bearing axis elements non-rotatably relative to one another.

13. Workholding device according to any of the preceding claims, **characterised in that** at least one of the workholders (21) has a first workholder segment (61-64) and at least one second workholder segment (61-64), wherein the workholder segments (61-64) are pivotable relative to one another about the pivot axis (15), wherein the workholder segments (61-64) are advantageously mounted pivotably on one another by means of a bearing arrangement (60).

14. Workholding device according to any of the preceding claims, **characterised in that** at least one of the workholder regions (31b, 32b; 31c, 32c) has retaining surfaces oriented at an angle to one another for holding at least one workpiece (90) each, so that workpieces (90) are available for machining by the at least one machining tool (12) at the respective retaining surfaces.

15. Machine tool (10) with a workholding device (20) according to any of the preceding claims.

## Revendications

1. Dispositif de support de pièce pour une machine-outil (10) pour supporter des pièces (90) pour un usinage mécanique avec au moins un outil d'usinage (12), dans lequel le dispositif de support de pièce (20) présente une première et au moins une deuxième zone de support de pièce (31, 32) pour supporter un premier et un deuxième agencement de pièce contenant respectivement au moins une pièce (90), dans lequel les zones de support de pièce (31, 32) sont pivotantes autour d'un axe de pivotement (15) dans une zone de travail (A) de l'au moins un outil d'usinage (12) pour l'usinage de pièce et dans une zone de changement de pièce (W) pour le changement de pièces (90) agencées au niveau de la zone de support de pièce (31, 32) respective, dans lequel le dispositif de support de pièce présente un premier support de pièce (21), au niveau duquel la première zone de support de pièce (31) est prévue, et au moins un deuxième support de pièce (22), au niveau duquel l'au moins une deuxième zone de support de pièce (32) est prévue, et dans lequel le premier et le deuxième support de pièce (21, 22) sont logés de manière coaxiale et pivotante l'un par rapport à l'autre autour de l'axe de pivotement (15), **caractérisé en ce que** la première zone de support de pièce (31) du premier support de pièce (21) et l'au moins une deuxième zone de support de pièce (32) de l'au moins un deuxième support de pièce (22) ont entièrement ou au moins sur une section partielle de l'axe de pivotement (15) la même position longitudinale par rapport à l'axe de pivotement (15), dans lequel le premier support de pièce (21) et l'au moins un deuxième support de pièce (22) sont logés au niveau de logements de palier (41, 42) espacés l'un par rapport à l'autre et s'étendent entre ou à côté des logements de palier (41, 42).

2. Dispositif de support de pièce selon la revendication 1, **caractérisé en ce que**, dans lequel il est prévu de manière avantageuse, que le premier support de pièce (21) est logé au niveau d'un premier élément de palier (43) avec un premier logement de palier (41) et l'au moins un deuxième support de pièce (22) est logé au niveau d'un deuxième élément de palier (44) avec un deuxième logement de palier (42), dans lequel les deux premier et deuxième logements de palier (41, 42) présentent l'un par rapport à l'autre une distance longitudinale par rapport à l'axe de pivotement (15).

3. Dispositif de support de pièce selon l'une quelconque des revendications précédentes, **caractérisé en ce qu'**un élément d'axe de palier de l'un support de pièce (21) fait saillie devant un élément d'axe de palier de l'autre support de pièce (22) dans un logement de palier (41, 42) logeant les deux éléments d'axe de palier par rapport à l'axe de pivotement (15), si bien que chacun des éléments d'axe de palier est logé directement au niveau du logement de palier (41, 42).

4. Dispositif de support de pièce selon l'une quelconque des revendications précédentes, **caractérisé en ce que** le premier support de pièce (21) loge l'au moins un deuxième support de pièce (22) et/ou l'au moins un deuxième support de pièce (22) loge le premier support de pièce (21) ou que le premier support de pièce (21) et l'au moins un deuxième support de pièce (22) sont logés l'un contre l'autre.

5. Dispositif de support de pièce selon la revendication 4, **caractérisé en ce qu'**un élément d'axe de palier (27) du premier support de pièce (21) et/ou un élément d'axe de palier (33) de l'au moins un deuxième support de pièce (22) sont logés coaxialement dans un logement de palier (41, 42) de respectivement l'autre support de pièce (21, 22) et/ou qu'au moins un élément d'axe de palier (27, 33) de l'un support de pièce (21, 22) présente une section d'arbre creux (28, 34), dans lequel l'élément d'axe de palier (29, 35) de l'autre support de pièce (21, 22) est reçu coaxialement.

6. Dispositif de support de pièce selon l'une quelconque des revendications précédentes, **caractérisé en ce qu'**au moins deux des supports de pièce (21, 22) sont entraînés indépendamment l'un de l'autre respectivement par un entraînement pivotant séparé (37, 38) et/ou qu'un couplage d'entraînement en rotation est prévu entre au moins deux des supports de pièce (21, 22), si bien qu'un entraînement pivotant (37) de l'un support de pièce (21) entraîne l'autre support de pièce (22) lorsque le couplage d'entraînement en rotation est fermé.

7. Dispositif de support de pièce selon la revendication 6, **caractérisé en ce qu'**un entraînement pivotant (37, 38, 51, 52) est prévu pour l'entraînement d'éléments d'axe de palier d'un support de pièce (21, 22) respectif au niveau d'au moins deux logements de palier (41, 42), de manière avantageuse au moins de chaque logement de palier (41, 42), si bien que le support de pièce (21, 22) peut être entraîné au moins au niveau d'une ou au niveau de plusieurs zones de palier espacées l'une par rapport à l'autre.

8. Dispositif de support de pièce selon l'une quelconque des revendications précédentes, **caractérisé en ce qu'**un entraînement direct est attribué à au moins un support de pièce (21, 22) pour le pivotement entre la zone de travail (A) et la zone de changement de pièce (W).

9. Dispositif de support de pièce selon l'une quelconque des revendications précédentes, **caractérisé en ce qu'**il présente un équipement de fixation (30) pour la fixation solidaire en rotation d'au moins un des supports de pièce (21, 22) par rapport à une base de machine, en particulier d'un coulisseau et/ou pour la fixation solidaire en rotation de l'un support de pièce (21) par rapport à l'autre support de pièce (22) en particulier des éléments d'axe de palier.

10. Dispositif de support de pièce selon la revendication 9, **caractérisé en ce que** l'équipement de fixation (30) présente des moyens de fixation entre au moins deux supports de pièce (21, 22), en particulier entre les éléments d'axe de palier (27, 29, 33, 35) de deux supports de pièce (21, 22) et/ou des moyens de fixation entre un support de pièce (21, 22) et un support logeant le support de pièce autour de l'axe de pivotement (15), dans lequel l'équipement de fixation (30) comprend de manière appropriée un équipement de serrage pour le serrage de l'un élément d'axe de palier avec l'autre élément d'axe de palier et/ou un équipement de verrouillage pour le verrouillage des deux éléments d'axe de palier l'un contre l'autre.

11. Dispositif de support de pièce selon la revendication 9 ou 10, **caractérisé en ce que** l'équipement de fixation (30) comprend une douille d'expansion (36) ou douille de serrage, qui est agencée dans une chambre intérieure de palier, en particulier dans une section d'arbre creux (28, 34), d'un élément d'axe de palier de l'un support de pièce (21, 22) ou d'un support portant le dispositif de support de pièce, et un élément d'axe de palier de l'autre support de pièce (21, 22) est agencé dans la douille d'expansion (36) ou douille de serrage, si bien que l'élément d'axe de palier intérieur est reçu de manière solidaire en rotation dans la chambre intérieure de palier, en particulier la section d'arbre creux (28, 34), lors d'un actionnement de la douille d'expansion (36) ou douille de serrage dans une position de fixation.

12. Dispositif de support de pièce selon l'une quelconque des revendications 9 à 11, **caractérisé en ce que** l'équipement de fixation (30) comprend un entraînement pivotant (37, 38, 51, 52), en particulier un entraînement de couple, qui est agencé dans une section d'arbre creux (28, 34) d'un élément d'axe de palier de l'un support de pièce (21) et reçoit cet élément d'axe de palier pour l'entraînement rotatif de l'élément d'axe de palier de l'autre support de pièce (22) et supporte les deux éléments d'axe de palier de manière solidaire en rotation l'un par rapport à l'autre dans une position de support.

13. Dispositif de support de pièce selon l'une quelconque des revendications précédentes, **caractérisé en ce qu'**au moins un des supports de pièce (21) présente un premier segment de support de pièce (61-64) et au moins un deuxième segment de support de pièce (61-64), dans lequel les segments de support de pièce (61-64) sont pivotants l'un par rapport à l'autre par rapport à l'axe de pivotement (15), dans lequel les segments de support de pièce (61-64) sont logés de manière pivotante l'un à l'autre de manière avantageuse à l'aide d'un agencement de palier (60).

14. Dispositif de support de pièce selon l'une quelconque des revendications précédentes, **caractérisé en ce qu'**au moins une des zones de support de pièce (31 b, 32b; 31 c, 32c) présente des surfaces de support anguleuses l'une par rapport à l'autre pour le support de respectivement au moins une pièce (90), si bien que des pièces (90) sont disponibles au niveau des surfaces de support respectives pour l'usinage par l'au moins un outil d'usinage (12).

15. Machine-outil (10) avec un dispositif de support de pièce (20) selon l'une quelconque des revendications précédentes.
